# EUROPÄISCHE PATENTSCHRIFT

(11) **EP 0 413 115 B1**
(45) Veröffentlichungstag und Bekanntmachung des Hinweises auf die Patenterteilung: **27.01.1993**
(21) Anmeldenummer: 90112173.1
(22) Anmeldetag: 27.06.1990
(51) Int. Cl.: B60K 20/02, F16H 59/04

(54) **Schaltvorrichtung**
Gear change device
Dispositif de changement de vitesse

(30) Priorität: 18.08.1989 DE 3927248
(43) Veröffentlichungstag der Anmeldung: 20.02.1991
(73) Patentinhaber: Dr.Ing.h.c. F. Porsche Aktiengesellschaft, 70435 Stuttgart (DE)
(72) Erfinder: Giek, Manfred, D-7141 Schwieberdingen (DE); Maier, Ulrich, D-7149 Freiberg/N. (DE); Schütte, Hans-Dieter, D-7265 Neubulach 3 (DE); Raff, Friedrich, D-7147 Eberdingen 3 (DE); Seidel, Willi, Dipl.-Ing., D-7141 Eberdingen Hochdorf (DE)

(56) Entgegenhaltungen:
- DE-A- 3 231 991
- DE-A- 3 807 881
- DE-A- 3 905 769
- GB-A- 1 158 829
- US-A- 4 590 817

## Beschreibung

Die Erfindung betrifft eine Schaltvorrichtung nach dem Oberbegriff des Patentanspruchs 1.

Bei einer nicht veröffentlichten Schaltvorrichtung, DE-A 38 07 881, werden bezüglich der Getriebeschaltmöglichkeiten mit dem Wählhebel - erste Schaltgasse Automatikbetrieb; zweite Schaltgasse Einzelgangschaltbetrieb - gute Ergebnisse erzielt.

Aufgabe der Erfindung ist es, die Schaltvorrichtung für ein automatisches Getriebe mit einem in zwei Schaltgassen verstellbaren Wählhebel weiter zu verbessern, dergestalt, daß das Umschalten von der ersten Schaltgasse in die zweite und vice versa bei vertretbarem Einsatz an Mitteln betriebssicher ist. Dabei sollte aber auch gewährleistet sein, daß die vom Wählhebel in der Schaltgasse der Einzelgangschaltung angesteuerten Sensoren und seine, die neutrale Mittellage bewirkenden Elemente funktionsgerecht ausgebildet und angeordnet sowie im Aufbau einfach sind.

Erfindungsgemäß wird diese Aufgabe durch die kennzeichnenden Merkmale des Anspruchs 1 gelöst. Weitere, die Erfindung ausgestaltende Merkmale sind in den Unteransprüchen enthalten.

Die mit der Erfindung hauptsächlich erzielten Vorteile sind darin zu sehen, daß die aus Zapfen und Federn bestehenden Einrichtungen den Wählhebel einerseits gut in seiner neutralen Mittelstellung halten und andererseits beim Hoch- und Rückschalten die entsprechenden elektrischen Schalter sicher betätigen. Dabei sind sowohl die Einrichtungen wie auch die Schalter einfache, kostengünstige Bauteile, die sich - gegebenenfalls mit weiteren Kontakteinrichtungen - leicht auf der Trägerplatte, die mit den genannten Schaltern und Kontakteinrichtungen ein vorgefertigtes Bauteil sein kann, befestigen lassen.

Zur Erzeugung eines definierten Druckpunktes am Wählhebel betätigen die Zapfen die Schalter in einem Kräfteoptimum der Federn. Dadurch erhält der Fahrer eine sinnreiche - fühlbare - Information über die korrekte Wählhebelverschwenkung und Zuschaltung eines gewünschten Einzelgangs.

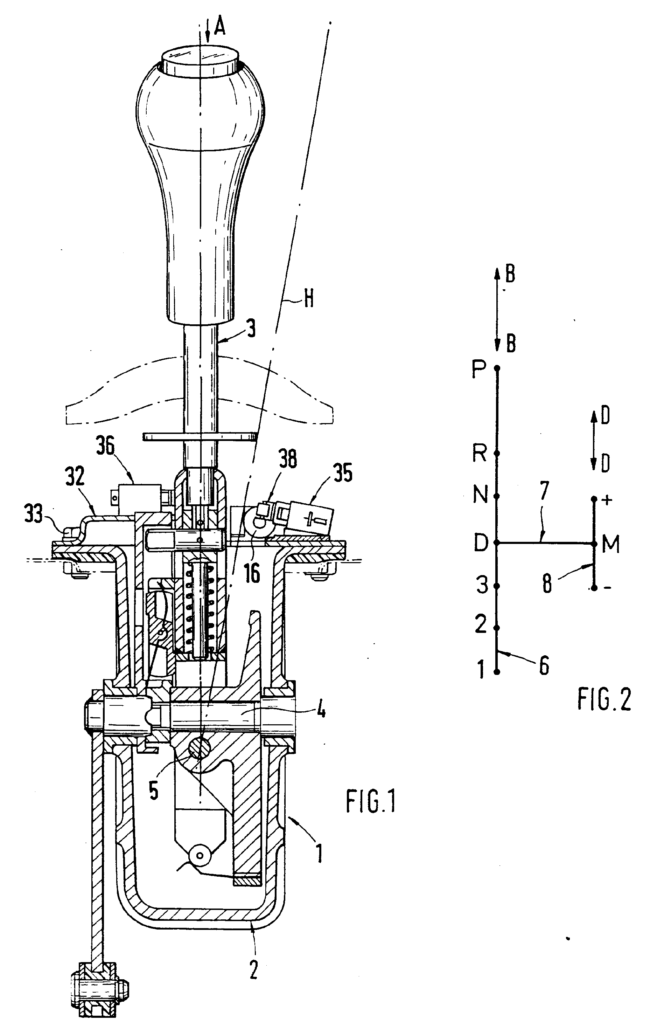

In der Zeichnunng ist ein Ausführungsbeispiel der Erfindung gezeigt, das nachstehend beschrieben ist.
Es zeigt
Fig. 1 einen Querschnitt durch eine Schaltvorrichtung mit einem in zwei Schaltgassen verschwenkbaren Wählhebel,
Fig. 2 ein Schaltschema des Wählhebels,

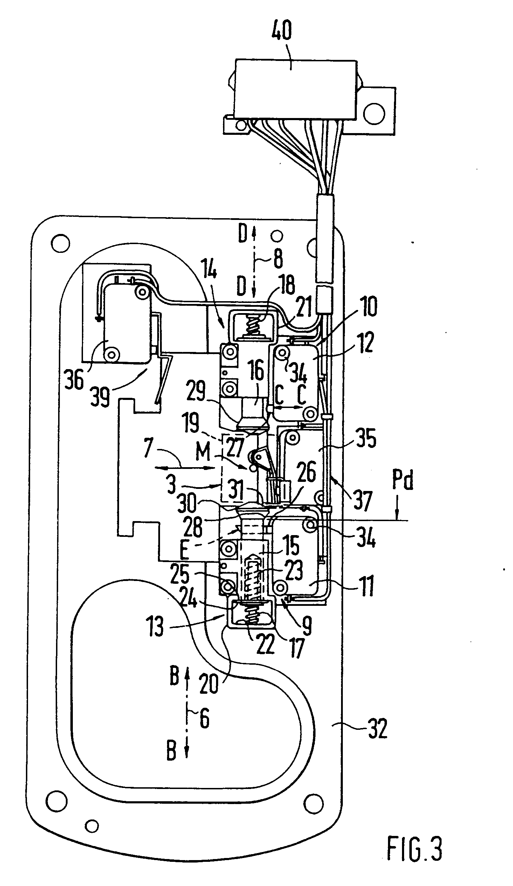

Fig. 3 eine Ansicht in Pfeilrichtung A der Fig. 1.

Mit einer Schaltvorrichtung 1 ist ein durch ein elektronisches Steuergerät ansteuerbares automatisches Getriebe für ein Kraftfahrzeug beeinflußbar: Steuergerät, automatisches Getriebe und Kraftfahrzeug sind nicht näher dargestellt; es wird hierzu auf die als Stand der Technik gennante DE-A 38 07 881 verwiesen.

Die Schaltvorrichtung 1 umfaßt ein im Querschnitt U-förmiges, behälterartiges Gehäuse 2 aus Kunststoff, Leichtmetallguß oder dergleichen, in dem ein Wählhebel 3 einerseits an einem quer zur Fahrzeuglängsrichtung B-B verlaufenden Bolzen 4 und andererseits an einem in Fahrzeuglängsrichtung B-B ausgerichteten Bolzen 5 gelagert ist. Durch diese kardanische Lagerung ist der Wählhebel 3 in einer ersten Schaltgasse 6 - in Fahrzeuglängsrichtung B-B - verschwenkbar, in der verschiedene Stellungen P = Parken, R = Rückwärtsgang, N = Neutral-0, D = Drive mit 4. Gang, 3 = 3. Gang, 2 = 2. Gang, 1 = 1. Gang des automatischen Getriebes schaltbar sind. Der Wählhebel 3 ist aber auch noch aus Stellung D der ersten Schaltgasse 6 heraus über eine Quergasse 7 in eine zweite Schaltgasse 8 umschaltbar. Die erste Schaltgasse 6 und die zweite Schaltgasse 8 verlaufen parallel zueinander, wobei diese mit der Quergasse 7 ein Doppel-T bilden.

Nach Einführung des Wählhebels 3 in die zweite Schaltgasse 8, ist letzterer ebenfalls in Fahrzeuglängsrichtung B-B verschwenkbar. Hierbei wird durch ein einmaliges Verschwenken des Wählhebels 3 aus einer Mittelstellung M heraus in Plus-Richtung (+) ein Hochschalten um jeweils einen Gang bewerkstelligt - Schrittschaltung -; das Rückschalten - auch um jeweils einen Gang - erfolgt durch Verschwenken des Hebels in Minus-Richtung (-). Der Wählhebel 3 wird nach jedem Schaltvorgang in Plus- oder Minus-Richtung selbsttätig in seine neutrale Mittelstellung M zurückgestellt.

Für das Hoch- und Rückschalten in der zweiten Schaltgasse 8 werden mittels des Hebels 3 Sensoren 9, 10 angesteuert, die durch Schalter 11, 12 gebildet werden. Die Schalter 11, 12 wirken mit Einrichtungen 13, 14 zusammen, die axialbeweglichen Zapfen 15, 16 und Federn 17, 18 aufweisen. Die Federn 17, 18 und die Zapfen 15, 16 suchen den Wählhebel 3 in seiner Mittelstellung M zu halten. Dabei stützen sich beide Zapfen 15, 16 direkt am Wählhebel bzw. einer örtlichen Verdickung 19 des Wählhebels 3 ab, sind also in Längsrichtung D-D - parallel zur Fahrzeuglängsrichtung B-B - ausgerichtet. Die als Schraubenfedern ausgebildeten Federn 17, 18 sind koaxial zu den Zapfen 15, 16 angeordnet. Dabei sind die Federn 17, 18 in Gehäusen 20, 21 untergebracht. Die Feder 17 stützt sich an einer Rückwand 22 des Gehäuses 20 ab und ragt in eine Einbohrung 23 des Zapfens 15 hinein, derart, daß der Zapfen 15 mit einem Anschlag 24 gegen eine weitere Wand 25 des Gehäuses 20 gespannt wird.

Die Schalter 11, 12 weisen Betätigungsstifte 26, 27 auf, die in Richtung C-C verstellbar sind; letztere erstreckt sich quer zur Längsrichtung D-D der Schaltgasse 8 und den Zapfen 15, 16. Zur Verstellung der Betätigungsstifte 26, 27 dienen Rampen 28, 29 der Zapfen 15, 16. Jede Rampe 28 ist ein Konus, der sich vom zylindrischen Zapfen 15 aus bis zu einem Kopf 30 erweitert, der eine kegelartige Abschrägung 31 aufweist und mit der Verdickung 19 des Wählhebels 3 abstützend zusammenarbeitet.

Wird der Zapfen 15 mittels des Wählhebels 3 in Minus-Richtung (-) verstellt, so wird der Schalter 11 über den Betätigungsstift 26 nach Erreichen der Position E betätigt. Dabei wird am Wählhebel 3 ein definierter Druckpunkt Pd erzeugt, der in einem Kräfteoptimum der Feder 17 liegt. Der Druckpunkt Pd ist empirisch und/oder rechnerisch ermittelbar.

Die Schalter 11, 12 und die Einrichtungen 13, 14 sind auf einer im Querschnitt U-förmig gestalteten Trägerplatte 32 befestigt, die eine Metallblechteil sein kann und als Deckel an der Oberseite des Gehäuses 2 mittels Schrauben 33 in Lage gehalten ist. Die Schalter 11, 12 und die Einrichtungen 13, 14 sind unter Vermittlung von Befestigungsmitteln 34 wie Schrauben, Niete oder dergleichen an der Trägerplatte 32 gehalten. Außerdem sind an der Trägerplatte 32 noch befestigt: eine Kontakteinrichtung 35 für den Betrieb der Einzelgangschaltung in der zweiten Schaltgasse 8 und eine weitere Kontakteinrichtung 36, die die Nicht-in-P-Stellung meldet, z. B. durch akustische Signale, und zwar dann, wenn sich der Wählhebel 3 in der ersten Schaltgasse 6 befindet. Die Kontakteinrichtung 35 ist auf der der ersten Schaltgasse 6 abgekehrten Seite 37 der zweiten Schaltgasse 8 vorgesehen, wobei sie und ihr Kontakthebel 38 senkrecht zur Lage H des Wählhebels 3 ausgerichtet ist, die dieser in der zweiten Schaltgasse 8 einnimmt.

Dagegen ist die weitere Kontakteinrichtung 36 auf der der zweiten Schaltgasse 8 abgekehrten Seite 39 der ersten Schaltgasse 6 angeordnet, wird also dann wirksam, wenn der Wählhebel 3 in der ersten Schaltgasse 6 verschwenkt wird.

Schließlich sind aus Gründen der baulichen Vereinfachung die Schalter 11, 12 und die Kontakteinrichtungen 35, 36 prinzipgleiche Bauteile, die mit ihren Kabeln an einen Stecker 40 angeschlossen sind.

## Patentansprüche

1. Schaltvorrichtung für ein durch ein elektronisches Steuergerät beeinflußtes automatisches Getriebe eines Kraftfahrzeuges mit einem Wählhebel, durch dessen Verschwenken in einer ersten Schaltgasse verschiedene Betriebsstufen und sich automatisch schaltende Getriebegänge wählbar sind, wobei der Wählhebel über eine Quergasse in eine zur ersten Schaltgasse parallele zweite Schaltgasse umschaltbar ist, in der der Wählhebel durch einmaliges Verschwenken aus einer neutralen Mittellage heraus und Betätigen eines ersten Sensors in der einen Richtung eine Hochschaltung um einen Gang und durch einmaliges Verschwenken in der entgegengesetzten Richtung und Betätigung eines zweiten Sensors eine Rückschaltung um einen Gang bewerkstelligbar ist, dergestalt, daß der Wählhebel nach dem jeweiligen Schaltvorgang in seine neutrale Mittellage zurückgestellt wird, dadurch gekennzeichnet, daß die Sensoren (9, 10) elektrische Schalter (11, 12) sind, die mit aus Federn (17, 18) belasteten, den Wählhebel (3) in seine neutrale Mittellage (M) zu bewegen suchenden Zapfen (15, 16) bestehenden Einrichtungen (13, 14) zusammenwirken.

2. Schaltvorrichtung nach Anspruch 1, dadurch gekennzeichnet, daß die Federn (17, 18) und die Zapfen (15, 16) in Längsrichtung (D-D) der zweiten Schaltgasse (8) ausgerichtet sind, wobei die Zapfen (15, 16) vorzugsweise unmittelbar vom Wählhebel (3) betätigt werden.

3. Schaltvorrichtung nach Anspruch 2, dadurch gekennzeichnet, daß die als Schraubenfedern ausgebildeten Federn (17, 18) koaxial zu den Zapfen (15, 16) angeordnet sind.

4. Schaltvorrichtung nach Anspruch 3, dadurch gekennzeichnet, daß jede Feder (17) und jeder Zapfen (18) in einem gemeinsamen Gehäuse (20) untergebracht sind.

5. Schaltvorrichtung nach einem oder mehreren der vorangehenden Ansprüche, dadurch gekennzeichnet, daß zur Erzeugung eines definierten Druckpunktes (Pd) des Wählhebels (3) in der zweiten Schaltgasse (8) die Zapfen (15, 16) die Schalter (11, 12) in einem Kräfteoptimum der Federn (17, 18) betätigen.

6. Schaltvorrichtung nach Anspruch 5, dadurch gekennzeichnet, daß die Schalter (11, 12) Betätigungsstifte (26, 27) aufweisen, die quer (Richtung C-C) zur Längsrichtung (D-D) der Zapfen (15, 16) angeordnet sind und von Rampen (28, 29) der axialbeweglichen Zapfen (15, 16) verstellt werden.

7. Schaltvorrichtung nach Anspruch 6, dadurch gekennzeichnet, daß jede Rampe (28) ein Konus ist, der sich vom zylindrischen Zapfen (15) aus erweitert.

8. Schaltvorrichtung nach Anspruch 7, dadurch gekennzeichnet, daß das freie Ende des Konus als Kopf (30) ausgebildet ist, der mit dem Wählhebel (3) zusammenwirkt.

9. Schaltvorrichtung nach einem oder mehreren der vorangehenden Ansprüche, dadurch gekennzeichnet, daß die Einrichtungen (13, 14) und die Schalter (11, 12) auf einer gemeinsamen Trägerplatte (32) befestigt sind.

10. Schaltvorrichtung nach einem oder mehreren der vorangehenden Ansprüche, dadurch gekennzeichnet, daß die Trägerplatte (32) als Deckel eines Gehäuses (2) der Schaltvorrichtung (1) ausgebildet ist.

11. Schaltvorrichtung nach Anspruch 9, dadurch gekennzeichnet, daß auf der Trägerplatte (32) eine elektrische Kontakteinrichtung (35) für den Betrieb der Einzelgangschaltung (Schaltgasse 8) angeordnet ist.

12. Schaltvorrichtung nach den Ansprüchen 1 und 11, dadurch gekennzeichnet, daß die Kontakteinrichtung (35) auf der der ersten Schaltgasse (6) abgekehrten Seite (37) der zweiten Schaltgasse (8) vorgesehen ist.

13. Schaltvorrichtung nach einem oder mehreren der vorangehenden Ansprüche, dadurch gekennzeichnet, daß an der Trägerplatte (32) eine weitere Kontakteinrichtung (36) für ein die Nicht-in-P-Stellung des Wählhebels (3) meldendes, vorzugsweise akustisches Signal vorgesehen ist.

14. Schaltvorrichtung nach den Ansprüchen 1 und 3, dadurch gekennzeichnet, daß die weitere Kontakteinrichtung (36) auf der der zweiten Schaltgasse (8) abgekehrten Seite (39) der ersten Schaltgasse (6) angeordnet ist.

15. Schaltvorrichtung nach einem oder mehreren der vorangehenden Ansprüche, dadurch gekennzeichnet, daß die Schalter (11, 12) und die Kontakteinrichtungen (35, 36) prinzipgleiche Bauteile sind.

## Claims

1. A gear-shift device for an automatic transmission of a motor vehicle controlled by an electronic control device, having a selector lever, different operating stages and automatically shifting gear speeds being selectable by pivoting the selector lever in a first gear-shift channel, and the selector lever being deflectable by way of a transverse channel into a second gear-shift channel which is parallel to the first gear-shift channel and in which the selector lever is capable [of] moving up one gear by being pivoted once from a neutral central position and by the actuation of a first sensor in one direction and [of] moving down one gear by being pivoted once in the opposite direction and by the actuation of a second sensor, in such a way that the selector lever is moved back into its neutral central position after the respective gear shift, characterized in that the sensors (9, 10) are electrical switches (11, 12) cooperating with devices (13, 14) comprising pins (15, 16) loaded [by] springs (17, 18) and urging the selector lever (3) into its neutral central position (M).

2. A gear shift device according to Claim 1, characterized in that the springs (17, 18) and the pins (15, 16) are orientated in the longitudinal direction (D-D) of the second gear-shift channel (8), the pins (15, 16) preferably being actuated directly by the selector lever (3).

3. A gear-shift device according to Claim 2, characterized in that the springs (17, 18) constructed in the form of helical springs are arranged coaxially with the pins (15, 16).

4. A gear-shift device according to Claim 3, characterized in that each spring (17) and each pin (18) [sic] are accommodated in a common housing (20).

5. A gear-shift device according to one or more of the preceding Claims, characterized in that in order to produce a defined centre of pressure (Pd) of the selector lever (3) in the second gear-shift channel (8) the pins (15, 16) actuate the switches (11, 12) in an optimum of forces of the springs (17, 18).

6. A gear-shift device according to Claim 5, characterized in that the switches (11, 12) comprise actuating pins (26, 27) arranged transversely (direction C-C) to the longitudinal direction (D-D) of the pins (15, 16) and displaced by sloping portions (28, 29) on the axially movable pins (15, 16).

7. A gear-shift according to Claim 6, characterized in that each sloping portion (28) is a cone widening outwards from the cylindrical pin (15).

8. A gear-shift device according to Claim 7, characterized in that the free end of the cone is constructed as a head cooperating with the selector lever (3).

9. A gear-shift device according to one or more of the preceding Claims, characterized in that the devices (13, 14) and the switches (11, 12) are secured to a common support plate (32).

10. A gear-shift device according to one or more of the preceding Claims, characterized in that the support plate (32) is constructed in the form of a cover of a housing (2) of the gear-shift device (1).

11. A gear-shift device according to Claim 9, characterized in that an electrical contact device (35) for operating the individual gear-shifting (gear-shift channel 8) is arranged on the support plate (32).

12. A gear-shift device according to Claims 1 and 11, characterized in that the contact device (35) is provided on the side (37) of the second gear-shift channel (8) remote from the first gear-shift channel (6).

13. A gear-shift device according to one or more of the preceding Claims, characterized in that a further contact device (36) for a preferably acoustic signal reporting the not-in-P position of the selector lever (3) is provided on the support plate (32).

14. A gear-shift device according to Claims 1 and 3, characterized in that the further contact device (36) is provided on the side (39) of the first gear-shift channel (6) remote from the second gear-shift channel (8).

15. A gear-shift device according to one or more of the preceding Claims, characterized in that the switches (11, 12) and the contact devices (35, 36) are in principle similar components.

## Revendications

1. Dispositif de changement de vitesse pour une boîte de vitesses automatique, influencée par une commande électronique, d'un véhicule automobile, comportant un levier de sélection dont le pivotement dans une première voie permet de sélectionner différents étages de fonctionnement et des vitesses commutant automatiquement, dans lequel le levier de sélection peut être commuté, à travers une voie transversale, dans une seconde voie parallèle à la première, dans laquelle le levier de sélection, par pivotement unique d'une position centrale de point mort et actionnement d'un premier capteur dans un sens, permet de passer à la vitesse supérieure et, par pivotement unique dans le sens opposé et actionnement d'un second capteur, permet de passer à la vitesse inférieure, de manière qu'après la commutation respective, le levier de sélection soit replacé dans sa position centrale de point mort, caractérisé en ce que les capteurs (9, 10) sont des interrupteurs électriques (11, 12) qui coopèrent avec des dispositifs (13, 14), constitués de tenons (15, 16), soumis à l'action de ressorts (17, 18), tendant à déplacer le levier de sélection (3) dans sa position centrale de point mort (M).

2. Dispositif de changement de vitesse selon la revendication 1, caractérisé en ce que les ressorts (17, 18) et les tenons (15, 16) sont orientés dans la direction longitudinales (D-D) de la seconde voie de commutation (8), les tenons (15, 16) étant de préférence directement actionnés par le levier de sélection (3).

3. Dispositif de changement de vitesse selon la revendication , caractérisé en ce que les ressorts (17, 18), se présentant sous la forme de ressorts hélicoïdaux, sont coaxiaux aux tenons (15, 16).

4. Dispositif de changement de vitesse selon la revendication 3, caractérisé en ce que tous les ressorts (17) et tous les tenons (18) sont logés dans un boîtier (20) commun.

5. Dispositif de changement de vitesse selon une ou plusieurs des revendications précédentes, caractérisé en ce que, pour produire un point de pression (Pd) défini du levier de sélection (3), dans la seconde voie de commutation (8), les tenons (15, 16) actionnent les interrupteurs (11, 12) à l'optimum des forces des ressorts (17, 18).

6. Dispositif de changement de vitesse selon la revendication 5, caractérisé en ce que les interrupteurs (11, 12) comportent des doigts d'actionnement (26, 27) qui sont disposés transversalement (direction C-C) à la direction longitudinale (B-B) des tenons (15, 16) et sont déplacés par des rampes (28, 29) des tenons (15, 16) mobiles axialement.

7. Dispositif de changement de vitesse selon la revendication 6, caractérisé en ce que chaque rampe (28) est un cône qui s'élargit à partir du tenon (15) cylindrique.

8. Dispositif de changement de vitesse selon la revendication 7, caractérisé en ce que l'extrémité libre du cône est une tête (30) qui coopère avec le levier de sélection (3).

9. Dispositif de changement de vitesse selon une ou plusieurs des revendications précédentes, caractérisé en ce que le dispositif (13, 14) et les interrupteurs (11, 12) sont fixés sur une plaque-support (32) commune.

10. Dispositif de commutation selon une ou plusieurs des revendications précédentes, caractérisé en ce que la plaque-support (32) se présente sous la forme d'un couvercle d'un boîtier (2) du dispositif de changement de vitesse (1).

11. Dispositif de changement de vitesse selon la revendication 9, caractérisé en ce qu'un dispositif à contact (35) électrique est prévu sur la plaque-support (3), pour la commande manuelle des rapports (voie de commutation 8).

12. Dispositif de changement de vitesse selon les revendications 1 et 11, caractérisé en ce que le dispositif à contact (35) est prévu sur le côté (37), opposé à la première voie de commutation (6), de la seconde voie (8).

13. Dispositif de changement de vitesse selon une ou plusieurs des revendications précédentes, caractérisé en ce qu'il est prévu sur la plaque-support (32), un autre dispositif à contact (36) pour un signal, de préférence acoustique, signalant la non-position en (P) du levier de sélection (3).

14. Dispositif de changement de vitesse selon les revendications 1 et 3, caractérisé en ce que l'autre dispositif à contact (36) est prévu sur le côté (39), opposé à la seconde voie de commutation (8), de la première voie (6).

15. Dispositif de changement de vitesse selon une ou plusieurs des revendications précédentes, caractérisé en ce que les interrupteurs (11, 12) et les dispositifs à contact (35, 36) sont des composants reposant sur le même principe.
